(19) Europäisches Patentamt / European Patent Office / Office européen des brevets

(11) EP 4 044 067 A1

# (12) EUROPEAN PATENT APPLICATION
published in accordance with Art. 153(4) EPC

(43) Date of publication:
17.08.2022 Bulletin 2022/33

(21) Application number: 19948777.8

(22) Date of filing: 07.10.2019

(51) International Patent Classification (IPC):
G06N 3/04 (2006.01)       G06F 21/55 (2013.01)

(52) Cooperative Patent Classification (CPC):
G06F 21/55; G06N 3/04

(86) International application number:
PCT/JP2019/039499

(87) International publication number:
WO 2021/070224 (15.04.2021 Gazette 2021/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FUJITSU LIMITED
Kawasaki-shi, Kanagawa 211-8588 (JP)

(72) Inventor: KODA, Satoru
Kawasaki-shi, Kanagawa 211-8588 (JP)

(74) Representative: Hoffmann Eitle
Patent- und Rechtsanwälte PartmbB
Arabellastraße 30
81925 München (DE)

(54) **INFORMATION PROCESSING PROGRAM, INFORMATION PROCESSING METHOD, AND INFORMATION PROCESSING DEVICE**

(57) An information processing program causes a computer to execute a process including identifying feature amounts for respective values in categorical data so as to minimize a third loss function based on a first loss function for extraction of feature amounts in categorical data and a second loss function for detection of abnormal values in the categorical data, and detecting the abnormal values in the categorical data, based on the feature amounts identified for the respective values in the categorical data.

FIG.7

(a) INEFFECTIVE FEATURE AMOUNTS

ANOMALY

NORMAL

ANOMALY

SEPARATION BOUNDARY IS UNCLEAR, AND THUS THERE IS POSSIBILITY THAT SOME DETECTION ALGORITHMS ARE NOT CAPABLE OF DEFINING CORRECT SEPARATION BOUNDARY (ESPECIALLY ALGORITHM HAVING STRONG NONLINEARITY)

(b) EFFECTIVE FEATURE AMOUNTS

ANOMALY

ANOMALY

SEPARATION BOUNDARY IS NOTICEABLE, AND THUS MANY DETECTION ALGORITHMS ARE CAPABLE OF DEFINING CORRECT SEPARATION BOUNDARY (ACHIEVED BY ANOMALY DETECTION APPARATUS ACCORDING TO EMBODIMENT)

**Description**

Technical Field

The embodiment discussed herein is related to an information processing program, an information processing method, and an information processing apparatus.

Background Art

Conventional technologies have been present for detecting abnormal values in categorical data. Herein, categorical data refers to data in which values are discrete. Examples of categorical data include internet protocol (IP) addresses, port numbers, and host names. By detecting an abnormal value in a source IP address as an anomaly IP address, unauthorized access can be detected.

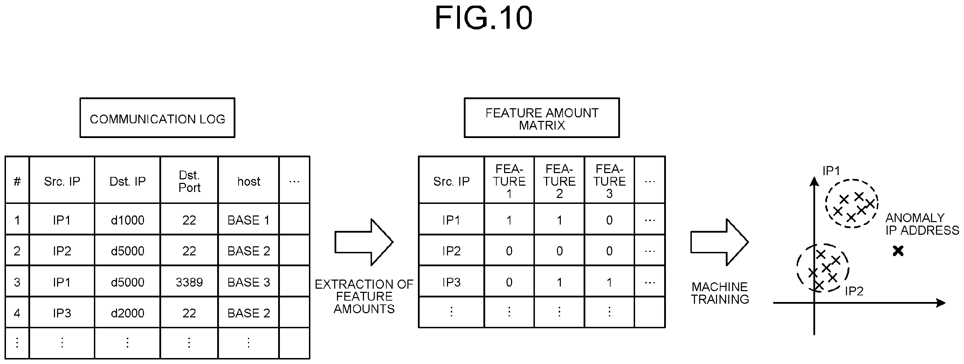

FIG. 10 is a diagram illustrating a flow of anomaly IP address detection. As illustrated in FIG. 10, an apparatus for detecting an anomaly IP address extracts feature amounts of source IP addresses from a communication log and conducts machine training by using the extracted feature amounts, thereby detecting an anomaly IP address.

A communication log includes Src. IP, Dst. IP, Dst. Port, and host. Src. IP refers to a source IP address. Dst. IP refers to a destination IP address. Dst. Port refers to a destination port number. host refers to a place where the communication log is obtained. The feature is, for example, whether a specific destination IP address is included. If the address is included, the feature amount is "1", and, if not, the feature amount is "0".

In a case in which feature amounts of source IP addresses are extracted, the communication log has enormous patterns, causing the feature amount vector of the source IP addresses to have a high dimension reaching several hundred thousand dimensions, which makes machine training inefficient.

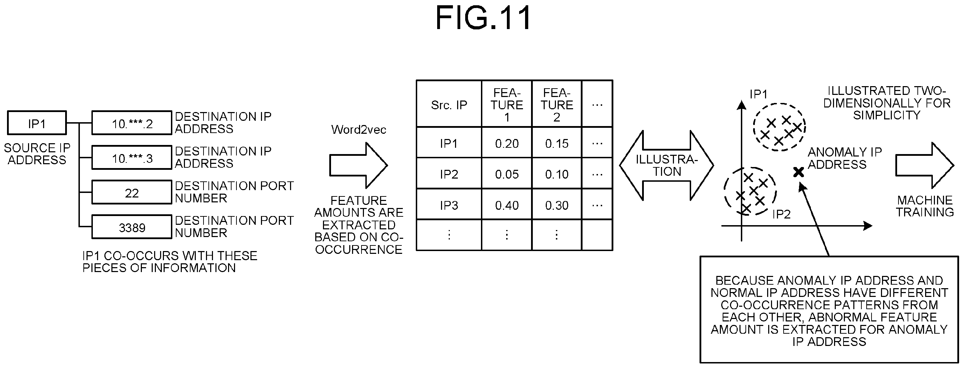

Thus, IP2Vec exists as a technology for extracting low-dimensional feature amount vectors. In IP2Vec, feature amounts of IP addresses are extracted based on co-occurrence patterns. FIG. 11 is a diagram for explaining IP2Vec. In FIG. 11, the source IP address "IP1" co-occurs with the destination IP address "10.***.2", the destination IP address "10.***.3", the destination port number "22", and the destination port number "3389" in the communication log.

In IP2Vec, feature vectors of IP addresses are extracted by applying Word2Vec to extract feature vectors of words on the basis of word co-occurrence. Because an anomaly IP address and a normal IP address have different co-occurrence patterns of destination IP addresses and destination port numbers from each other, an abnormal feature amount is extracted for the anomaly IP address.

As a conventional technology for analyzing an abnormality in a network, a communication analysis apparatus has been present that, when detecting an abnormality on a network, is capable of determining the content of abnormality. This communication analysis apparatus has a plurality of abnormality detection units that detect the degree of an abnormality of the network from information generated in a network device. The communication analysis apparatus also has a feature amount generation unit that generates, for each of the abnormality detection units, a feature amount to be supplied to the abnormality detection unit from the information generated by the network device. The communication analysis apparatus also has a detection result management unit that manages management information obtained by summing up detection results detected by each of the abnormality detection units on the basis of the feature amount. The communication analysis apparatus also has: a determination unit that performs a determination process of determining the content of an abnormality that has occurred on the network on the basis of the management information managed by the detection result management unit; and an output unit that outputs determination result information indicating the result of the determination process.

Citation List

Patent Citation

Patent Literature 1: Japanese Laid-open Patent Publication No. 2019-80201

Non Patent Citation

Non Patent Literature 1: Ring, Markus, et al. "IP2Vec: Learning Similarities between IP Addresses.", 2017 IEEE International Conference on Data Mining Workshops (ICDMW), IEEE, 2017.

Summary of Invention

Technical Problem

Conventional anomaly detection performs feature extraction and detection at independent steps. Consequently, a feature amount effective for detection is not capable of being extracted at the feature extraction step, and detection precision is problematically low. Herein, a feature amount effective for detection refers to such a feature amount that the separation boundary between normal and anomaly is noticeable in a feature amount space.

Accordingly, it is an object of the present invention to provide an information processing program, an information processing method, and an information processing apparatus that improve the precision of anomaly detection.

Solution to Problem

In one proposal, an information processing program causes a computer to execute a process including: identifying feature amounts for respective values in categorical data so as to minimize a third loss function based on a first loss function for extraction of feature amounts in categorical data and a second loss function for detection of abnormal values in the categorical data; and detecting the abnormal values in the categorical data, based on the feature amounts identified for the respective values in the categorical data.

Advantageous Effects of Invention

In one aspect of an embodiment of the invention, the precision of anomaly detection can be improved.

Brief Description of Drawings

FIG. 1 is a diagram illustrating a functional configuration of an anomaly detection apparatus according to an embodiment.
FIG. 2 is a diagram illustrating an example encoding of logs.
FIG. 3 is a diagram for explaining generation of feature amounts by a feature amount generation unit.
FIG. 4A is a diagram illustrating definitions of symbols for IP2Vec.
FIG. 4B is a diagram illustrating definitions of symbols for SVDD.
FIG. 5 is a flowchart illustrating a flow of a process performed by the anomaly detection apparatus.
FIG. 6 is a diagram illustrating a flow of a process of computing anomaly scores by generating feature amounts that minimize L.
FIG. 7 is a diagram for explaining effective feature amounts generated by the anomaly detection apparatus.
FIG. 8 is a diagram illustrating the effect of the anomaly detection apparatus.
FIG. 9 is a diagram illustrating a hardware configuration of a computer that executes an anomaly detection program according to the embodiment.
FIG. 10 is a diagram illustrating a flow of anomaly IP address detection.
FIG. 11 is a diagram for explaining IP2Vec.

Embodiments for Carrying Out the Invention

Preferred embodiments of an information processing program, an information processing method, and an information processing apparatus of the present invention will be explained in detail below with reference to accompanying drawings. The embodiments are not intended to limit the disclosed technology.

Embodiment

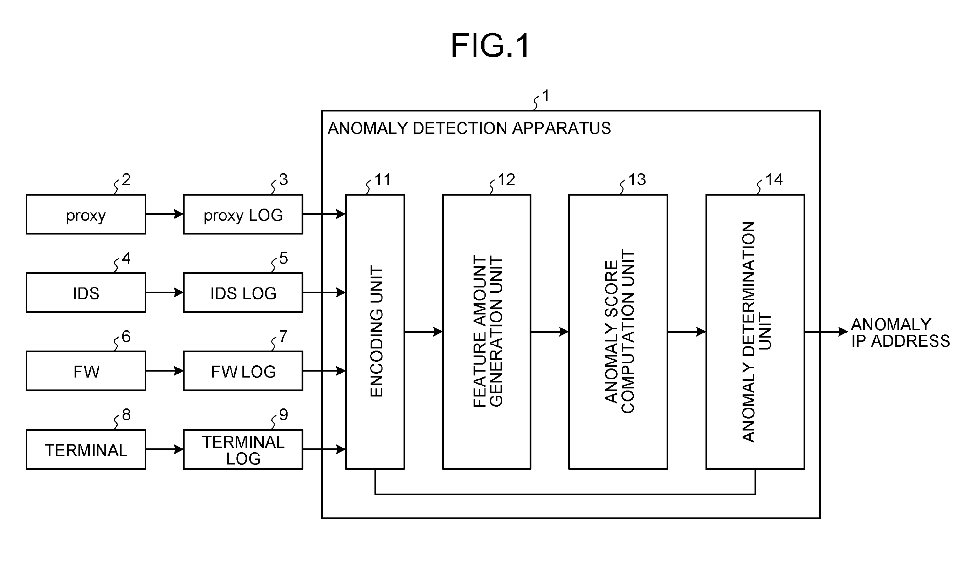

A functional configuration of an anomaly detection apparatus according to an embodiment will be explained first. FIG. 1 is a diagram illustrating the functional configuration of the anomaly detection apparatus according to the embodiment. As illustrated in FIG. 1, an anomaly detection apparatus 1 according to the embodiment has an encoding unit 11, a feature amount generation unit 12, an anomaly score computation unit 13, and an anomaly determination unit 14.

The encoding unit 11 receives a proxy log 3 from a proxy 2, receives an intrusion detection system (IDS) log 5 from an IDS 4, receives a firewall (FW) log 7 from FW 6, and receives a terminal log 9 from a terminal 8. The encoding unit 11 may receive other communication logs from other devices.

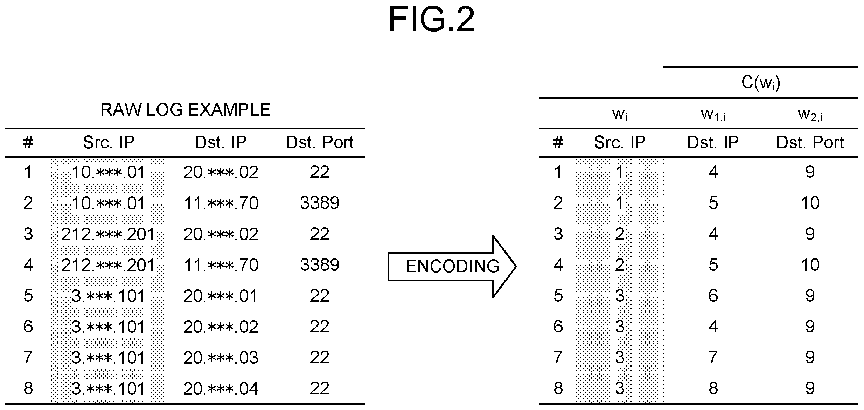

The encoding unit 11 then encodes these logs. FIG. 2 is a diagram illustrating an example encoding of logs. In FIG. 2, Src. IP refers to a source IP address, Dst. IP refers to a destination IP address, and Dst Port refers to a destination port number. i represents the log number, and, in this example, the total number of logs N = 8. $w_i$ represents the source IP address of the i-th log. $C(w_i) = \{w_{i,i}, \cdots, w_{c,i}\}$ represents communication information of the i-th log, and c represents the number of pieces of information constituting the communication information of $w_i$. In this example, c = 2, $w_{1,i}$ is Dst. IP, and $w_{2,i}$ is Dst. Port.

As illustrated in FIG. 2, the Src. IP "10.***.01" is encoded into "1", the Src. IP "212.***.201" is encoded into "2", and the Src. IP "3.***.101" is encoded into "3". Also, the Dst. IP "20.***.02" is encoded into "4", the Dst. IP "11.***.70" is encoded into "5", and the Dst. IP "20.***.01" is encoded into "6". Also, the Dst. IP "20.***.03" is encoded into "7", and the Dst. IP "20.***.04" is encoded into "8". Also, the Dst. Port "22" is encoded into "9", and the Dst. Port "3389" is encoded into "10".

The feature amount generation unit 12 receives an encoding result encoded by the encoding unit 11, and generates a feature amount of the source IP address. The feature amount generation unit 12 generates a feature amount that minimizes

$$a \text{ loss function } L = L_{extraction} + \lambda L_{detection}.$$

Herein, $L_{extraction}$ is a loss function for feature extraction, and $L_{detection}$ is a loss function for anomaly detection. $\lambda$ represents the coefficient for adjusting a trade-off between the loss function for feature extraction and the loss function for anomaly detection. An inequality $\lambda > 0$ holds.

For example, in a case in which IP2Vec is used to extract a feature amount of a source IP address, $L_{extraction}$ is defined by the following expression (1).
Expression 1

$$L_{\text{extraction}}(U, U') = -\sum_i \sum_c \log P(w_{c,i}|w_i; U, U') \tag{1}$$

Herein, U and U' respectively represent a weighting matrix from an input layer to a hidden layer and a weighting matrix from the hidden layer to a final layer in IP2Vec. $P(w_{c,i}|w_i; U, U')$ represents the posterior probability that, when $w_i$ is determined, $w_{c,i}$ co-occur.

For example, in a case in which support vector data description (SVDD) is used to perform anomaly detection, $L_{detection}$ is defined by the following expression (2).
Expression 2

$$L_{\text{detection}}(U, \boldsymbol{c}_0) = \sum_j \left\| \phi(\boldsymbol{h}_j) - \boldsymbol{c}_0 \right\|_2^2 \tag{2}$$

Herein, $\varphi$ represents an arbitrary map, $c_0$ represents a point in a mapping space H, and $h_j$ represents a feature amount of a source IP address j. $c_0$ and $h_j$ are vectors. In expressions and drawings, vectors such as $c_0$ and $h_j$ appear in boldface, while, in the rest, boldface is not used. $\|\varphi(h_j) - c_0\|_2$ represents the $L_2$ norm of $\varphi(h_j)-c_0$.

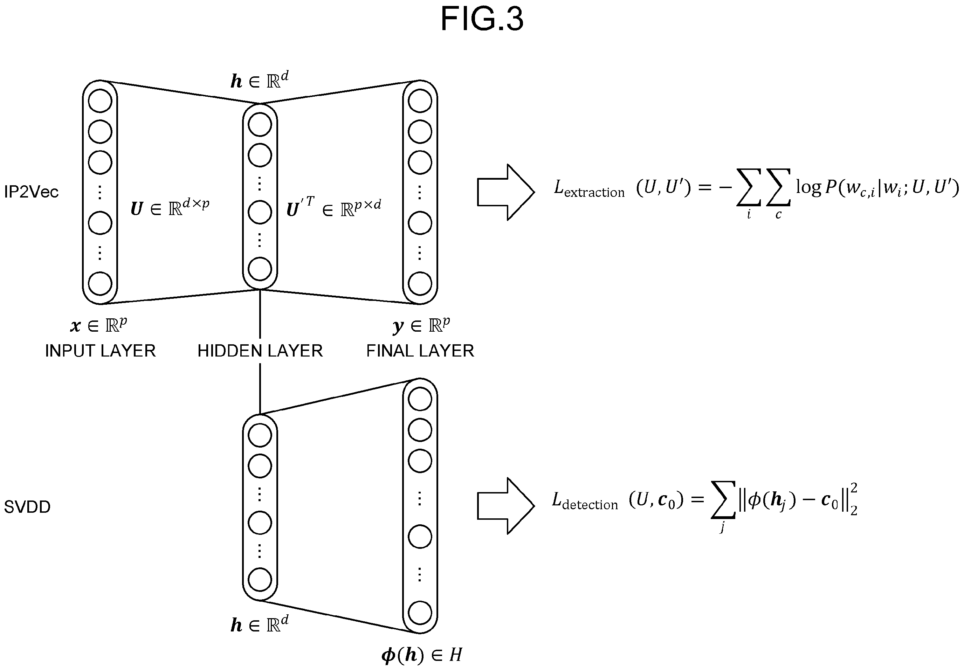

FIG. 3 is a diagram for explaining generation of feature amounts by the feature amount generation unit 12.

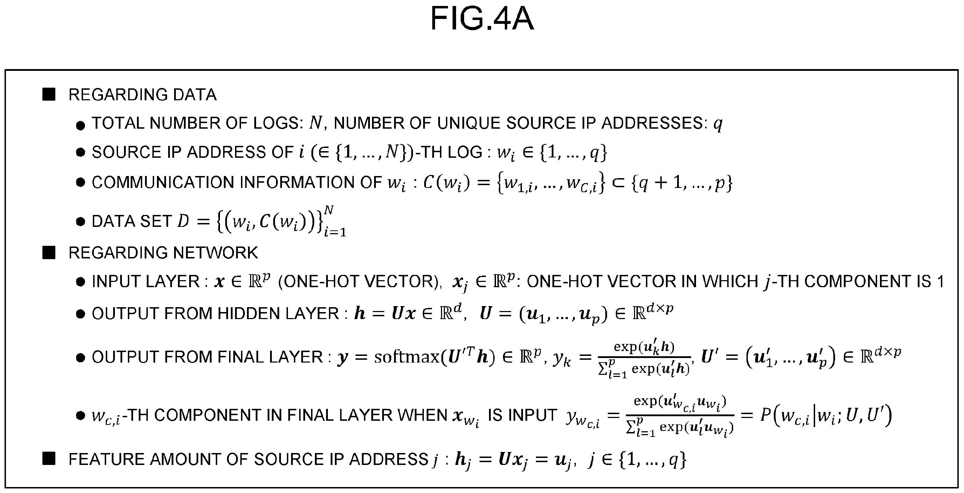

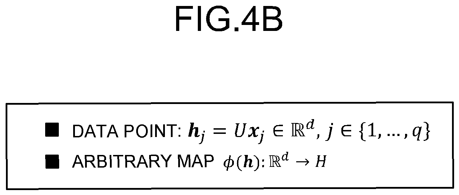

FIG. 3 illustrates a case in which IP2Vec is used for feature extraction and SVDD is used for anomaly detection. Regarding FIG. 3, FIG. 4A illustrates definitions of symbols for IP2Vec, and FIG. 4B illustrates definitions of symbols for SVDD. In FIG. 4A, a one-hot vector is a vector in which a single 1 is used for only one element and 0s are used for the other elements.

As illustrated in FIG. 3, a neural network (NN) with a single hidden layer is used in IP2Vec. The number of neurons in the input layer is p, the number of neurons in the hidden layer is d, and he number of neurons in the final layer is p. Herein, p represents the total number of patterns of communication information, and, of that number, q represents the number of unique source IP addresses. d represents the number of feature amounts extracted for the source IP addresses. Letting an input is x, an output h from the hidden layer is h = Ux, and an output y from the final layer is y = softmax(U'Th). $U'^T$ is a transpose of U'.

In an NN based on IP2Vec, training is conducted using $(w_i, C(w_i))$ as training data. In other words, training is conducted so that $C(w_i)$ is output in response to an input of $w_i$. The input of $w_i$ is provided as a one-hot vector $x_i$ in which

the number of components is p and the component corresponding to $w_i$ is 1. Training is conducted so that, in response to an input of $x_i$, an output of a neuron corresponding to $w_{c,i}$ in the final layer is 1. The output of the neuron corresponding to $w_{c,i}$ in the final layer is $P(w_{c,i}|w_i;U, U')$.

In other words, in IP2Vec, U and U' are calculated so that the posterior probability $P(w_{c,i}|w_i;U, U')$ that, when $w_i$ is determined, $w_{c,i}$ co-occur reaches a maximum, and the feature amount vector of the source IP address j is obtained as $u_j$. Consequently, in IP2Vec, by minimizing the loss function defined by expression (1), the posterior probability $P(w_{c,i}|w_i;U, U')$ is maximized, which extracts an optimum feature amount vector.

The feature amount generation unit 12 takes the output h = Ux = u at the hidden layer of IP2Vec as an input to SVDD. In SVDD, h is mapped by the map $\varphi$ in the space H. The dimension of H is arbitrary. A loss function of SVDD is found in the following expression (3).

Expression 3

$$L_{\text{detection}}(U, \boldsymbol{c}_0, r) = r^2 + C \sum_j \max\left\{0, \left\|\phi(\boldsymbol{h}_j) - \boldsymbol{c}_0\right\|_2^2 - r^2\right\} \tag{3}$$

Herein, r represents a radius of a sphere centering around $c_0$ in the space H. If the space H is two-dimensional, r is a radius of a circle. If the space H is three-dimensional, r is a radius of a sphere. C represents a coefficient for adjusting a trade-off between the first term and the second term. The first term represents the size of the sphere, and the second term is the sum of squares of the distances from points out of the sphere, of the points of the feature amount vector $u_j$ of the source IP address j ($j \in \{1, \cdots, q\}$) mapped in the space H, to the surface of the sphere. A larger sphere enables the second term to be zero but the first term to be larger, while a smaller sphere enables the first term to be smaller but the second term to be larger with more points out of the sphere.

In SVDD, by minimizing expression (3), r and $c_0$ are determined so that points of the feature amount vector $u_j$ mapped in the space H gather as closer to $c_0$ as possible. However, the feature amount generation unit 12 minimizes expression (2) as an abbreviated version of expression (3).

In this manner, the feature amount generation unit 12 connects the output $h_j = Ux_j = u_j$ at the hidden layer of IP2Vec to the loss function for anomaly detection, thereby enabling extraction of a feature amount suitable for anomaly detection. The feature amount generation unit 12 uses gradient descent, for example, as an optimization method to minimize the loss function L.

The explanation returns to FIG. 1 now. The anomaly score computation unit 13 computes an anomaly score by using the feature amount generated by the feature amount generation unit 12. The anomaly score computation unit 13 computes an anomaly score $S_j$ by using the following expression (4).

$$S_j = \left\|\phi(\boldsymbol{h}_j) - \boldsymbol{c}_0\right\|_2^2 \tag{4}$$

The anomaly determination unit 14 compares the anomaly score $S_j$ with a predetermined threshold, and, if the anomaly score $S_j$ is equal to or greater than the predetermined threshold, detects the source IP address j as an anomaly IP address. The anomaly determination unit 14 decodes the encoded anomaly IP address and displays the address on a display device.

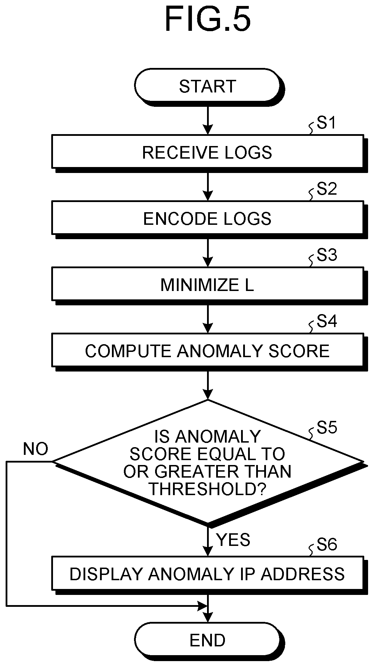

A flow of a process performed by the anomaly detection apparatus 1 will be explained next. FIG. 5 is a flowchart illustrating the flow of a process performed by the anomaly detection apparatus 1. As illustrated in FIG. 5, the anomaly detection apparatus 1 receives logs (step S1). In other words, the anomaly detection apparatus 1 receives the proxy log 3, the IDS log 5, the FW log 7, and the terminal log 9.

The anomaly detection apparatus 1 then encodes the logs (step S2), and minimizes L (step S3). The anomaly detection apparatus 1 then computes the anomaly score for each source IP address (step S4), determines whether the anomaly score is equal to or greater than a threshold (step S5), and, if the anomaly score is equal to or greater than the threshold, displays an anomaly IP address (step S6).

In this manner, the anomaly detection apparatus 1 minimizes a loss function for feature extraction and a loss function for anomaly detection at the same time by minimizing L, which enables extraction of a feature amount suitable for anomaly detection.

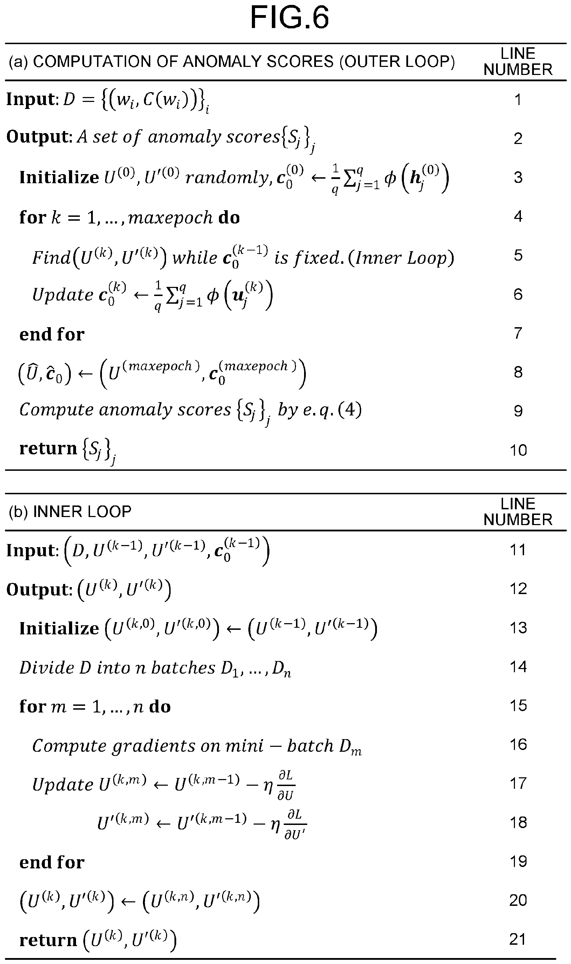

FIG. 6 is a diagram illustrating a flow of a process of computing anomaly scores by generating feature amounts that minimize L. As illustrated in FIG. 6, the flow of the process of computing anomaly scores by generating feature amounts that minimize L is made up of two loops: (a) anomaly score computation (outer loop); and (b) inner loop.

As illustrated in FIG. 6(a), the input of the outer loop is a data set D = {($w_i$, C($w_i$))}$_i$ (line number 1), and the output is an anomaly score $\{S_j\}_j$ (line number 2). The anomaly detection apparatus 1 randomly initializes a 0-th generation U and U', and initializes a 0-th generation $c_0$ with a mean value of a 0-th generation $\varphi(h_j)$ (line number 3).

The anomaly detection apparatus 1 then computes a first-generation to maximum generation U, U', and $c_0$ by performing repeated computation (line numbers 4 to 7), and takes the maximum generation U and $c_0$ as optimum values (line number 8). The anomaly detection apparatus 1 computes k-th generation U and U' in the inner loop while fixing a (k-1)-th generation $c_0$ during the repeated computation (line number 5), and computes a k-th generation $c_0$ by using the k-th generation U (line number 6). The anomaly detection apparatus 1 computes anomaly scores $\{S_j\}_j$ by using expression (4) from the optimum values of U and $c_0$ (line number 9), and returns the anomaly scores $\{S_j\}_j$ (line number 10).

As illustrated in FIG. 6(b), the input of the inner loop is D and (k-1)-th generation U, U', and $c_0$ (line number 11), and the output is the k-th generation U and U' (line number 12). In the inner loop, the anomaly detection apparatus 1 initializes 0-th batch of the k-th generation U and U' with the (k-1)-th generation U and U' (line number 13), and dives D into n mini batches $D_1, \cdots, D_n$ (line number 14).

The anomaly detection apparatus 1 then computes a first batch to an n-th batch of the k-th generation U and U' by performing repeated computation (line numbers 15 to 19), and takes the n-th batch of the k-th generation U and U' as the k-th generation U and U' (line number 20). The anomaly detection apparatus 1 then returns the k-th generation U and U' (line number 21).

The anomaly detection apparatus 1 computes a gradient of L with respect to U and a gradient of L with respect to U' by using a mini batch $D_m$ during the repeated computation (line number 16). The anomaly detection apparatus 1 subtracts a value obtained by multiplying the gradient of L with respect to U by $\eta$ from a (m-1)-th batch of the k-th generation U to compute a m-th batch of the k-th generation U (line number 17). The anomaly detection apparatus 1 also subtracts a value obtained by multiplying the gradient of L with respect to U' by $\eta$ from a (m-1)-th batch of the k-th generation U' to compute a m-th batch of the k-th generation U' (line number 18).

In this manner, the anomaly detection apparatus 1 repeats a process the number of times of the maximum generation while adding 1 to k one at a time, the process of computing the k-th generation U and U' by using gradient descent while fixing the (k-1)-th generation $c_0$ and computing the k-th generation $c_0$ by using the computed k-th generation U. Consequently, the anomaly detection apparatus 1 can compute U and $c_0$ that minimize L.

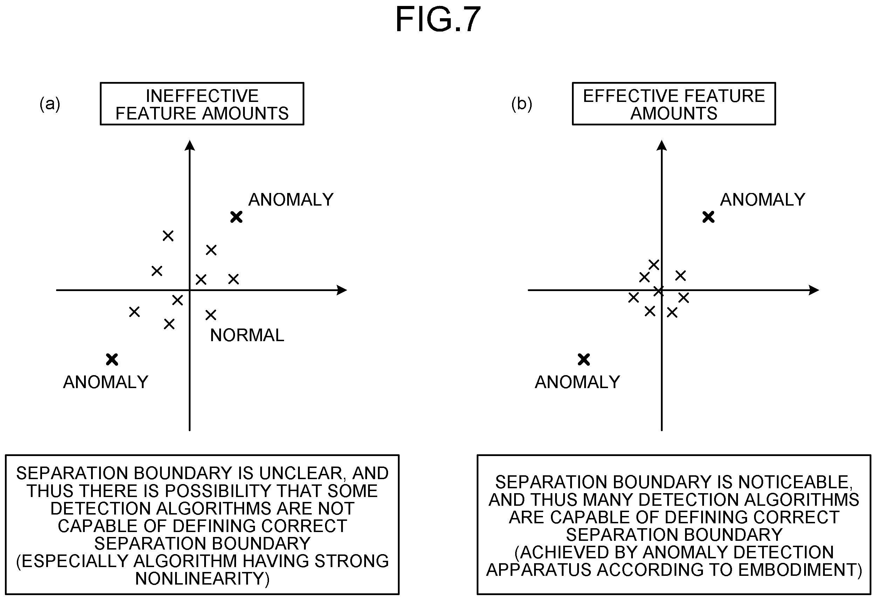

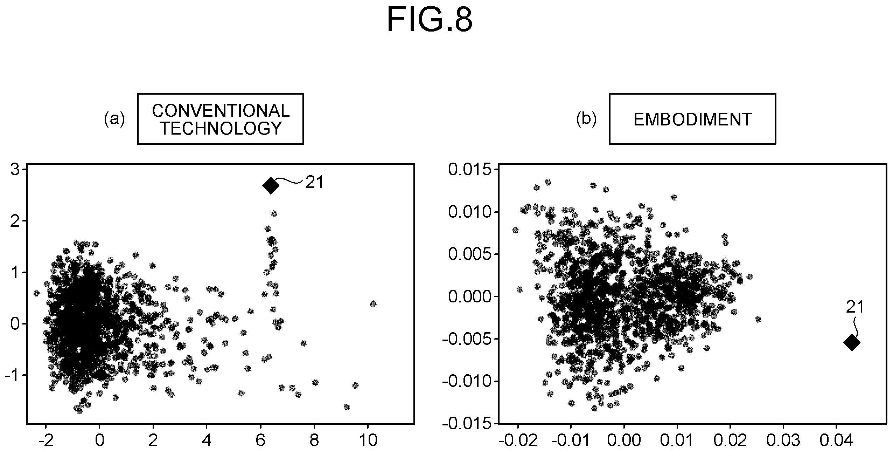

The effect of the anomaly detection apparatus 1 will be explained next with reference to FIG. 7 and FIG. 8. FIG. 7 is a diagram for explaining effective feature amounts generated by the anomaly detection apparatus 1. FIG. 7(a) illustrates ineffective feature amounts, and FIG. 7(b) illustrates effective feature amounts generated by the anomaly detection apparatus 1. FIG. 7 illustrates cases in which the number of feature amounts is two for convenience of explanation.

As illustrated in FIG. 7(a), in the case in which the feature amounts are ineffective, the separation boundary between normal and anomaly is unclear in the feature amount space, and thus there is a possibility that some detection algorithms are not capable of defining a correct separation boundary. There is a possibility that especially an algorithm having strong nonlinearity is not capable of defining a correct separation boundary.

Meanwhile, in the case in which the feature amounts generated by the anomaly detection apparatus 1 are effective, the separation boundary between normal and anomaly is noticeable in the feature amount space, as illustrated in FIG. 7(b), and thus many detection algorithms are capable of defining a correct separation boundary. The anomaly detection apparatus 1 generates a feature amount effective for detection, which can improve the precision of anomaly detection.

FIG. 8 is a diagram illustrating the effect of the anomaly detection apparatus 1. FIG. 8 illustrates a case in which coburg intrusion detection data sets (CIDDS)-001 are used as an example of data sets. The task of this example is to detect an IP address of an attacker from one hundred thousand IDS logs including about four thousand IP addresses as an anomaly IP address. FIG. 8(a) illustrates feature amounts of a conventional technology, and FIG. 8(b) illustrates feature amounts of the embodiment. A point 21 indicates an anomaly IP address, and other points indicate normal IP addresses.

As illustrated in FIG. 8, in the embodiment, the separation boundary between normal and anomaly is noticeable as compared with the conventional technology, and the feature amounts of the embodiment are effective as compared with the feature amounts of the conventional technology. Also, precision (PRC) = 0.90 in the embodiment, whereas PRC = 0.22 in the conventional technology. Herein, PRC refers to the ratio of being a truly anomaly IP address to IP address that have been determined as anomaly, and being closer to 1 is better. Consequently, the anomaly detection apparatus 1 has higher precision than the conventional technology.

As has been explained above, in the embodiment, the feature amount generation unit 12 generates a feature amount that minimizes the loss function $L = L_{extraction} + \lambda L_{detection}$, and can thus generate a feature amount effective for anomaly detection. Consequently, the anomaly detection apparatus 1 can improve the detection precision.

In the embodiment, the feature amount generation unit 12 connects the output at the hidden layer of the NN based on IP2Vec to $L_{detection}$, thereby minimizing the loss function L, which can minimize $L_{extraction}$ and $L_{detection}$ at the same time.

In the embodiment, the case has been explained in which IP2Vec is used for feature amount extraction and SVDD is used for anomaly detection. However, the anomaly detection apparatus 1 may use other methods for feature amount extraction and anomaly detection. In the embodiment, the case has been explained in which gradient descent is used for optimization. However, the anomaly detection apparatus 1 may use other methods for optimization. In the embodiment, the case has been explained in which an anomaly IP address is detected. However, the anomaly detection apparatus 1 may detect other abnormal values in categorical data.

While the anomaly detection apparatus 1 has been explained in the embodiment, an anomaly detection program having the same functions can be obtained by achieving the configuration that the anomaly detection apparatus 1 has by means of software. Thus, a computer that executes the anomaly detection program will be explained.

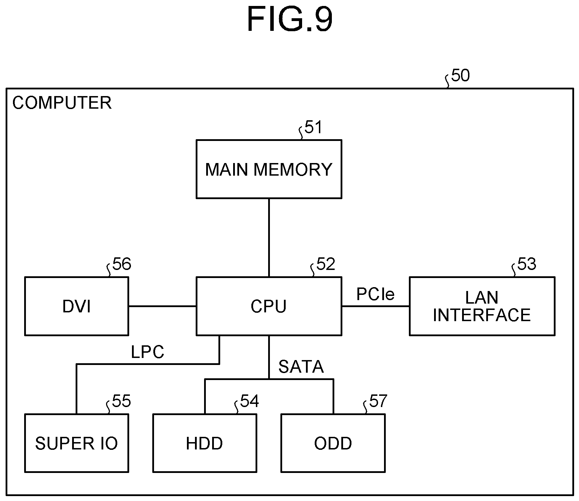

FIG. 9 is a diagram illustrating a hardware configuration of a computer that executes an anomaly detection program according to the embodiment. As illustrated in FIG. 9, a computer 50 has a main memory 51, a central processing unit (CPU) 52, a local area network (LAN) interface 53, and a hard disk drive (HDD) 54. The computer 50 also has a super input/output (IO) 55, a digital visual interface (DVI) 56, and an optical disk drive (ODD) 57.

The main memory 51 is a memory that stores therein computer programs, intermediate results of executing the computer programs, or the like. The CPU 52 is a central processing unit that reads a computer program from the main memory 51 and executes the computer program. The CPU 52 includes a chip set having a memory controller.

The LAN interface 53 is an interface for connecting the computer 50 through a LAN to another computer. The HDD 54 is a disk device that stores therein computer programs and data, and the super IO 55 is an interface for connecting input devices, such as a mouse and a keyboard. The DVI 56 is an interface for connecting a liquid crystal display, and the ODD 57 is a device that reads and writes DVDs and CD-Rs.

The LAN interface 53 is connected to the CPU 52 with PCI Express (PCIe), and the HDD 54 and the ODD 57 are connected to the CPU 52 via serial advanced technology attachment (SATA). The super IO 55 is connected to the CPU 52 via low pin count (LPC).

The anomaly detection program to be executed on the computer 50 is stored in a CD-R, which is an example of a recording medium readable by the computer 50, is read from the CD-R by the ODD 57, and is installed in the computer 50. Alternatively, the anomaly detection program is stored in a database and the like of another computer system connected through the LAN interface 53, is read from such a database, and is installed in the computer 50. The installed anomaly detection program is then stored in the HDD 54, is read into the main memory 51, and is executed by the CPU 52.

Explanation of Reference

1     Anomaly detection apparatus
2     Proxy
3     Proxy log
4     IDS
5     IDS log
6     FW
7     FW log
8     Terminal
9     Terminal log
11    Encoding unit
12    Feature amount generation unit
13    Anomaly score computation unit
14    Anomaly determination unit
21    Point
50    Computer
51    Main memory
52    CPU
53    LAN interface
54    HDD
55    Super IO
56    DVI
57    ODD

**Claims**

1. An information processing program that causes a computer to execute a process comprising:

   identifying feature amounts for respective values in categorical data so as to minimize a third loss function based on a first loss function for extraction of feature amounts in categorical data and a second loss function for detection of abnormal values in the categorical data; and
   detecting the abnormal values in the categorical data, based on the feature amounts identified for the respective values in the categorical data.

2. The information processing program according to claim 1, wherein the third loss function is a function obtained by adding the first loss function to a function obtained by multiplying the second loss function by a value for adjusting a trade-off between the first loss function and the second loss function.

3. The information processing program according to claim 1 or 2, wherein

   the categorical data is source IP addresses,
   the identifying identifies feature amounts of source IP addresses included in a communication log by using the communication log, and
   the detecting detects an anomaly IP address.

4. The information processing program according to claim 3, wherein

   the identifying identifies the feature amounts by using IP2Vec, and
   the detecting detects the abnormal values by using SVDD.

5. The information processing program according to claim 4, wherein the identifying connects an output at a hidden layer of a neural network used for identifying the feature amounts to the second loss function to minimize the third loss function.

6. An information processing method for a computer to execute a process comprising:

   identifying feature amounts for respective values in categorical data so as to minimize a third loss function based on a first loss function for extraction of feature amounts in categorical data and a second loss function for detection of abnormal values in the categorical data; and
   detecting the abnormal values in the categorical data, based on the feature amounts identified for the respective values in the categorical data.

7. An information processing apparatus comprising:

   an identification unit configured to identify feature amounts for respective values in categorical data so as to minimize a third loss function based on a first loss function for extraction of feature amounts in categorical data and a second loss function for detection of abnormal values in the categorical data; and
   a detection unit configured to detect the abnormal values in the categorical data, based on the feature amounts identified by the identification unit for the respective values in the categorical data.

FIG.1

EP 4 044 067 A1

# FIG.2

RAW LOG EXAMPLE

| # | Src. IP | Dst. IP | Dst. Port |
|---|---------|---------|-----------|
| 1 | 10.***.01 | 20.***.02 | 22 |
| 2 | 10.***.01 | 11.***.70 | 3389 |
| 3 | 212.***.201 | 20.***.02 | 22 |
| 4 | 212.***.201 | 11.***.70 | 3389 |
| 5 | 3.***.101 | 20.***.01 | 22 |
| 6 | 3.***.101 | 20.***.02 | 22 |
| 7 | 3.***.101 | 20.***.03 | 22 |
| 8 | 3.***.101 | 20.***.04 | 22 |

ENCODING ⇒

| | | $C(w_i)$ | |
|---|---|---|---|
| | $w_i$ | $w_{1,i}$ | $w_{2,i}$ |
| # | Src. IP | Dst. IP | Dst. Port |
| 1 | 1 | 4 | 9 |
| 2 | 1 | 5 | 10 |
| 3 | 2 | 4 | 9 |
| 4 | 2 | 5 | 10 |
| 5 | 3 | 6 | 9 |
| 6 | 3 | 4 | 9 |
| 7 | 3 | 7 | 9 |
| 8 | 3 | 8 | 9 |

EP 4 044 067 A1

# FIG.3

$$L_{\text{extraction}}(U, U') = -\sum_i \sum_c \log P(w_{c,i} | w_i; U, U')$$

IP2Vec

$\boldsymbol{h} \in \mathbb{R}^d$

$\boldsymbol{U} \in \mathbb{R}^{d \times p}$    $\boldsymbol{U'}^T \in \mathbb{R}^{p \times d}$

$\boldsymbol{x} \in \mathbb{R}^p$

INPUT LAYER    HIDDEN LAYER    FINAL LAYER

$\boldsymbol{y} \in \mathbb{R}^p$

SVDD

$$L_{\text{detection}}(U, \boldsymbol{c}_0) = \sum_j \left\| \phi(\boldsymbol{h}_j) - \boldsymbol{c}_0 \right\|_2^2$$

$\boldsymbol{h} \in \mathbb{R}^d$

$\boldsymbol{\phi}(\boldsymbol{h}) \in H$

EP 4 044 067 A1

# FIG.4A

■ REGARDING DATA

- ● TOTAL NUMBER OF LOGS: $N$, NUMBER OF UNIQUE SOURCE IP ADDRESSES: $q$

- ● SOURCE IP ADDRESS OF $i$ ($\in \{1, ..., N\}$)-TH LOG : $w_i \in \{1, ..., q\}$

- ● COMMUNICATION INFORMATION OF $w_i$ : $C(w_i) = \{w_{1,i}, ..., w_{C,i}\} \subset \{q + 1, ..., p\}$

- ● DATA SET $D = \left\{\left(w_i, C(w_i)\right)\right\}_{i=1}^{N}$

■ REGARDING NETWORK

- ● INPUT LAYER : $x \in \mathbb{R}^p$ (ONE-HOT VECTOR), $x_j \in \mathbb{R}^p$: ONE-HOT VECTOR IN WHICH $j$-TH COMPONENT IS 1

- ● OUTPUT FROM HIDDEN LAYER : $h = Ux \in \mathbb{R}^d$, $U = (u_1, ..., u_p) \in \mathbb{R}^{d \times p}$

- ● OUTPUT FROM FINAL LAYER : $y = \text{softmax}(U'^T h) \in \mathbb{R}^p$, $y_k = \frac{\exp(u'_k h)}{\sum_{l=1}^{p} \exp(u'_l h)}$, $U' = \left(u'_1, ..., u'_p\right) \in \mathbb{R}^{d \times p}$

- ● $w_{c,i}$-TH COMPONENT IN FINAL LAYER WHEN $x_{w_i}$ IS INPUT $y_{w_{c,i}} = \frac{\exp(u'_{w_{c,i}} u_{w_i})}{\sum_{l=1}^{p} \exp(u'_l u_{w_i})} = P\left(w_{c,i}\middle|w_i; U, U'\right)$

■ FEATURE AMOUNT OF SOURCE IP ADDRESS $j$ : $h_j = Ux_j = u_j$, $j \in \{1, ..., q\}$

EP 4 044 067 A1

# FIG.4B

- DATA POINT: $\boldsymbol{h}_j = U\boldsymbol{x}_j \in \mathbb{R}^d, j \in \{1, \ldots, q\}$
- ARBITRARY MAP $\phi(\boldsymbol{h}): \mathbb{R}^d \to H$

# FIG.5

START

RECEIVE LOGS — S1

ENCODE LOGS — S2

MINIMIZE L — S3

COMPUTE ANOMALY SCORE — S4

IS ANOMALY SCORE EQUAL TO OR GREATER THAN THRESHOLD? — S5

NO

YES

DISPLAY ANOMALY IP ADDRESS — S6

END

# FIG.6

| (a) COMPUTATION OF ANOMALY SCORES (OUTER LOOP) | LINE NUMBER |
|---|---|
| **Input:** $D = \{(w_i, C(w_i))\}_i$ | 1 |
| **Output:** *A set of anomaly scores* $\{S_j\}_j$ | 2 |
| **Initialize** $U^{(0)}, U'^{(0)}$ *randomly,* $c_0^{(0)} \leftarrow \frac{1}{q}\sum_{j=1}^{q} \phi\left(h_j^{(0)}\right)$ | 3 |
| **for** $k = 1, \dots, maxepoch$ **do** | 4 |
| $Find\left(U^{(k)}, U'^{(k)}\right)$ *while* $c_0^{(k-1)}$ *is fixed.* $(Inner\ Loop)$ | 5 |
| $Update\ c_0^{(k)} \leftarrow \frac{1}{q}\sum_{j=1}^{q} \phi\left(u_j^{(k)}\right)$ | 6 |
| **end for** | 7 |
| $\left(\hat{U}, \hat{c}_0\right) \leftarrow \left(U^{(maxepoch)}, c_0^{(maxepoch)}\right)$ | 8 |
| $Compute\ anomaly\ scores\ \{S_j\}_j\ by\ e.q.(4)$ | 9 |
| **return** $\{S_j\}_j$ | 10 |

| (b) INNER LOOP | LINE NUMBER |
|---|---|
| **Input:** $\left(D, U^{(k-1)}, U'^{(k-1)}, c_0^{(k-1)}\right)$ | 11 |
| **Output:** $\left(U^{(k)}, U'^{(k)}\right)$ | 12 |
| **Initialize** $\left(U^{(k,0)}, U'^{(k,0)}\right) \leftarrow \left(U^{(k-1)}, U'^{(k-1)}\right)$ | 13 |
| $Divide\ D\ into\ n\ batches\ D_1, \dots, D_n$ | 14 |
| **for** $m = 1, \dots, n$ **do** | 15 |
| $Compute\ gradients\ on\ mini-batch\ D_m$ | 16 |
| $Update\ U^{(k,m)} \leftarrow U^{(k,m-1)} - \eta\frac{\partial L}{\partial U}$ | 17 |
| $U'^{(k,m)} \leftarrow U'^{(k,m-1)} - \eta\frac{\partial L}{\partial U'}$ | 18 |
| **end for** | 19 |
| $\left(U^{(k)}, U'^{(k)}\right) \leftarrow \left(U^{(k,n)}, U'^{(k,n)}\right)$ | 20 |
| **return** $\left(U^{(k)}, U'^{(k)}\right)$ | 21 |

# FIG.7

(a)  INEFFECTIVE FEATURE AMOUNTS

ANOMALY

NORMAL

ANOMALY

SEPARATION BOUNDARY IS UNCLEAR, AND THUS THERE IS POSSIBILITY THAT SOME DETECTION ALGORITHMS ARE NOT CAPABLE OF DEFINING CORRECT SEPARATION BOUNDARY (ESPECIALLY ALGORITHM HAVING STRONG NONLINEARITY)

(b)  EFFECTIVE FEATURE AMOUNTS

ANOMALY

ANOMALY

SEPARATION BOUNDARY IS NOTICEABLE, AND THUS MANY DETECTION ALGORITHMS ARE CAPABLE OF DEFINING CORRECT SEPARATION BOUNDARY (ACHIEVED BY ANOMALY DETECTION APPARATUS ACCORDING TO EMBODIMENT)

# FIG.8

(a) CONVENTIONAL TECHNOLOGY

(b) EMBODIMENT

EP 4 044 067 A1

# FIG.9

COMPUTER 50

MAIN MEMORY 51

DVI 56

CPU 52

PCIe

LAN INTERFACE 53

LPC

SATA

SUPER IO 55

HDD 54

ODD 57

# FIG.10

EP 4 044 067 A1

**COMMUNICATION LOG**

| # | Src. IP | Dst. IP | Dst. Port | host | ⋯ |
|---|---------|---------|-----------|--------|---|
| 1 | IP1 | d1000 | 22 | BASE 1 | |
| 2 | IP2 | d5000 | 22 | BASE 2 | |
| 3 | IP1 | d5000 | 3389 | BASE 3 | |
| 4 | IP3 | d2000 | 22 | BASE 2 | |
| ⋮ | ⋮ | ⋮ | ⋮ | ⋮ | |

EXTRACTION OF FEATURE AMOUNTS →

**FEATURE AMOUNT MATRIX**

| Src. IP | FEA-TURE 1 | FEA-TURE 2 | FEA-TURE 3 | ⋯ |
|---------|------------|------------|------------|---|
| IP1 | 1 | 1 | 0 | ⋯ |
| IP2 | 0 | 0 | 0 | ⋯ |
| IP3 | 0 | 1 | 1 | ⋯ |
| ⋮ | ⋮ | ⋮ | ⋮ | ⋮ |

MACHINE TRAINING →

IP1
ANOMALY IP ADDRESS
IP2

# FIG.11

IP1 — SOURCE IP ADDRESS

- 10.***.2 — DESTINATION IP ADDRESS
- 10.***.3 — DESTINATION IP ADDRESS
- 22 — DESTINATION PORT NUMBER
- 3389 — DESTINATION PORT NUMBER

IP1 CO-OCCURS WITH THESE PIECES OF INFORMATION

Word2vec →

FEATURE AMOUNTS ARE EXTRACTED BASED ON CO-OCCURRENCE

| Src. IP | FEA-TURE 1 | FEA-TURE 2 | ⋯ |
|---|---|---|---|
| IP1 | 0.20 | 0.15 | ⋯ |
| IP2 | 0.05 | 0.10 | ⋯ |
| IP3 | 0.40 | 0.30 | ⋯ |
| ⋮ | ⋮ | ⋮ | |

ILLUSTRA-TION

ILLUSTRATED TWO-DIMENSIONALLY FOR SIMPLICITY

IP1

IP2

ANOMALY IP ADDRESS

BECAUSE ANOMALY IP ADDRESS AND NORMAL IP ADDRESS HAVE DIFFERENT CO-OCCURRENCE PATTERNS FROM EACH OTHER, ABNORMAL FEATURE AMOUNT IS EXTRACTED FOR ANOMALY IP ADDRESS

MACHINE TRAINING

EP 4 044 067 A1

## INTERNATIONAL SEARCH REPORT

| International application No. |
|---|
| PCT/JP2019/039499 |

**A. CLASSIFICATION OF SUBJECT MATTER**
Int. Cl. G06N3/04(2006.01)i, G06F21/55(2013.01)i

According to International Patent Classification (IPC) or to both national classification and IPC

**B. FIELDS SEARCHED**

Minimum documentation searched (classification system followed by classification symbols)
Int. Cl. G06N3/04, G06F21/55

Documentation searched other than minimum documentation to the extent that such documents are included in the fields searched
```
Published examined utility model applications of Japan      1922-1996
Published unexamined utility model applications of Japan    1971-2019
Registered utility model specifications of Japan            1996-2019
Published registered utility model applications of Japan    1994-2019
```

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | STRODTHOFF, Nils et al., Enhanced Machine Learning Techniques for Early HARQ Feedback Prediction in 5G, arXiv [online], v1, 27 August 2018 [retrieved on 22 November 2019], Retrieved from the Internet: <URL:https://arxiv.org/pdf/1807.10495v1,pdf>, pp. 1-14 | 1-2, 6-7<br>3-5 |
| A | SUN, Jiayu et al., Learning Sparse Representation With Variational Auto-Encoder for Anomaly Detection, IEEE Access, volume 6, IEEE [online], 15 June 2018 [retrieved on 22 November 2019], Retrieved from the Internet <URL:https://ieeexplore.ieee.org/document/8386760>, pp. 33353-33361 | 1-7 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25.11.2019 | 10.12.2019 |

| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/039499

C (Continuation).    DOCUMENTS CONSIDERED TO BE RELEVANT

| Category* | Citation of document, with indication, where appropriate, of the relevant passages | Relevant to claim No. |
|---|---|---|
| A | RING, Markus et al., IP2Vec: Learning Similarities between IP Addresses, Proceedings of 2017 IEEE International Conference on Data Mining Workshop, IEEE [online], 21 November 2017 [retrieved on 22 November 2019], Retrieved from the Internet: <URL:https://ieeexplore.ieee.org/document/8215725>, pp. 657-666 | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019080201 A

**Non-patent literature cited in the description**

- IP2Vec: Learning Similarities between IP Addresses. **RING, MARKUS et al.** 2017 IEEE International Conference on Data Mining Workshops (ICDMW). IEEE, 2017